# EUROPÄISCHE PATENTSCHRIFT

(11) **EP 0 710 053 B1**
(45) Veröffentlichungstag und Bekanntmachung des Hinweises auf die Patenterteilung: **26.01.2000**
(21) Anmeldenummer: 95115842.7
(22) Anmeldetag: 07.10.1995
(51) Int. Cl.: H05B 41/28

(54) **Ansteuerschaltung für eine Stromsparlampe**
Operating circuit for a compact fluorescent lamp
Circuit de commande d'un tube TL

(30) Priorität: 10.10.1994 CH 304494
(43) Veröffentlichungstag der Anmeldung: 01.05.1996
(73) Patentinhaber: PinBeam AG, 8493 Saland (CH)
(72) Erfinder: Muessli, Daniel, 3038 Kirchlindach (CH)
(74) Vertreter: Frei, Alexandra Sarah

(56) Entgegenhaltungen:
- EP-A- 0 360 156
- EP-A- 0 599 405
- DE-A- 3 611 611
- LASKAI L ET AL: "A UNITY POWER FACTOR ELECTRONIC BALLAST FOR METAL HALIDE LAMPS" 13.Februar 1994 , PROCEEDINGS OF THE ANNUAL APPLIED POWER ELECTRONICS CONFERENCE AND EXPOSITION (APEC), ORLANDO, FEB. 13 - 17, 1994, VOL. 1, PAGE(S) 31 - 37 , INSTITUTE OF ELECTRICAL AND ELECTRONICS ENGINEERS XP000467297 * Abbildung 1 *

## Beschreibung

Die vorliegende Erfindung betrifft eine Ansteuerungschaltung für eine Stromsparlampe gemäss der Definition der Ansprüche.

Ansteuerungsschaltungen für Entladungslampen, auch Leuchtstofflampen genannt, sind bekannt. Solche sind beispielsweise in der DE-A-3611611, oder in der WO 90/05992 beschrieben. Die erstgenannnte Veröffentlichung beschreibt im einzelnen die verschiedenen Einzelteile der Anordnung, so dass an dieser Stelle Hinweise genügen. Ein Hauptbestandteil ist ein Gegentaktfrequenzgenerator mit den beiden Transistoren T1 und T2 und den Rücklaufdioden D5 und D6, die zusammen mit dem Widerstand R1 und dem Kondensator C5 die Frequenz des Hochfrequenzschwingkreises stabilisieren, Dabei bewirkt der Kondensator eine Beeinflussung der Anstiegscharakteristik der Transistoren T1 und T2. Die Transistoren sind zu ihrem Betrieb noch mit Basiswiderständen R2, R4, und den Emitterwiderständen R3, R5 versehen. Zur Definition der Anstiegsflanke des Gleichrichters mit den Dioden D1, D2, dienen die Koppelkondensatoren C3, C4. Eine Anschwingschaltung besteht aus einem ersten Widerstand R1 und einem Kondensator C5, einer Diode D4 und einem Diac und sorgt dafür, dass beim Einschalten der Netzspannung AC an den Klemmen P und 0 der Hochfrequenzschwingkreis mit einer ersten Induktivität I1 an den Basiswiderstand R2 und mit einer zweiten Induktivität I2 an den Basiswiderstand R4 in Schwingung versetzt wird. Die beiden Wicklungen I1 und I2 sind auf einen gemeinsamen Ringkern gewickelt.

Das Problem, das es zu lössen gilt, ist einerseits die Erhöhung des Wirkungsgrades der Entladungslampe, der durch die Elektrizitätswerke weltweit auf mindestens 95 % angesetzt wird und die Verhinderung von störenden Spannungsspitzen auf der Netzspannung infolge der Hochfrequenz.

Die beschriebene Lösung gemäss der DE-A-3611611 benützt zur Vermeidung der Spannungsspitzen Drosseln im Netzfrequenzbereich, die relativ gross und schwer sind, und sich nicht unbedingt für Stromsparlampen eignen. Die Ansteuerung gemäss der genannten WO-90/05992 betrifft eine Temperaturkompensation zur Konstanthaltung der Lichtausbeute der Entladungslampen, jedoch zur Ansteuerung wird eine ähnliche Anordnung, wie die beschriebene benützt.

Die Schrift EP-599,405, die als nächstliegender Stand der Technik angesehen wird, zeigt eine vierpolige Ansteuerungsschaltung für eine Stromsparlampe mit Brückengleichrichteranordnung am Wechselstromkreis mit Phasen- und Nulleiter, ferner zeigt sie eine Anschwingschaltung und einen Hochfrequenzschwingkreis. Eine erste Elektrode der Stromsparlampe ist über eine Verbindungsleitung an einem Anschluss zwischen zwei Transistoren des Hochfrequenzschwingkreises angeschlossen und eine zweite Elektrode der Stromsparlampe ist mit dem Nulleiter verbunden. Dadurch werden Spannungsspitzen kompensiert und der Wirkungsgrad erhöht.

Es ist demgemäss eine Aufgabe der Erfindung eine Ansteuerungsschaltung zu schaffen, bei der ein hoher Wirkungsgrad erzielbar ist und die auf das Versorgungsnetz zurückwirkenden Spannungsspitzen praktisch null sind.

Erfindungsgemäss wird dies durch die Merkmale im kennzeichnenden Teil des Anspruchs 1 erreicht.

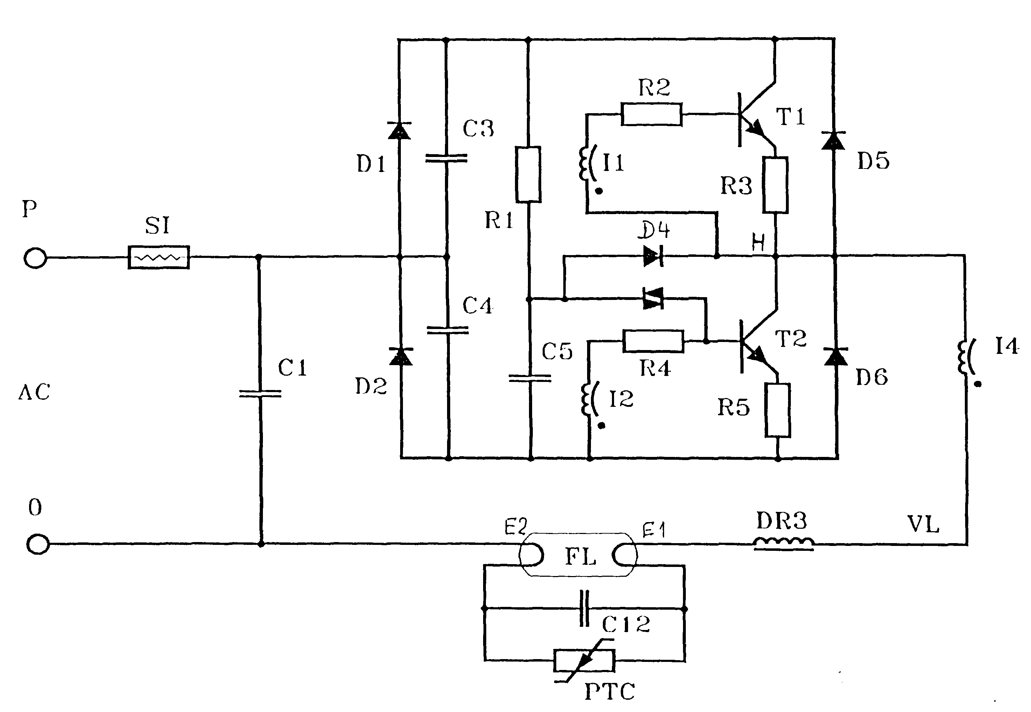

Nachfolgend wird ein Ausführungsbeispiel der Erfindung anhand der einen Figur in der Zeichnung näher erläutert.

Die eingangs erläuterte Anordnung bezieht sich auf diese eine Figur mit den entsprechenden Bezugszeichen. Somit muss an dieser Stelle nur die zusätzliche Verbindungsstrecke VL und deren Wirkung beschrieben werden.

Die Verbindungsleitung VL verbindet den gemeinsamen Anschluss H der beiden Transistoren T1 und T2 und führt über eine Induktivität I4, die zusammen mit den genannten Induktivitäten I1 und I2 auf einen gemeinsamen Ringkern gewickelt ist, und eine Drossel DR3 zu der einen Elektrode E1 der Entladungslampe FL.

Die zweite Elektrode E2 der Entladungslampe FL ist an den Nulleiter 0 des Speisenetzes angeschlossen, so dass der gesamte Stromfluss der Speisung immer über die Entladungslampe FL geführt ist. Somit fliessen die Speisespannung 50 Hz und die Regelfrequenz von 40 kHz über die Entladungslampe FL, was zur Folge hat, dass der Strom begrenzt wird. Die Gleichrichtung mit den Dioden D5 und D6 beschneidet die Überspannungsspitzen die durch die Transistoren T1 und T2 zusammen mit der Induktivität der Drossel DR3 erzeugt werden. Die Kondensatoren C3 und C4 übertragen die Hochfrequenz und speichern zugleich die Energie der Netzspannungsgleichrichtung mit den Dioden D1 und D2. Der eingangsseitige Kondensator C1 ist für die Rückkopplung der Hochfrequenz notwendig.

Damit ist die Versorgungsspannung für den Hochfrequenzschwingkreis über den Verbraucher und die Verbindungsleitung geführt, was dazu führt, dass alle Verluste über diesen Verbraucher gehen.

## Patentansprüche

1. Ansteuerungschaltung für eine Stromsparlampe (FL),
mit einer Gleichrichteranordnung (D1, D2) am Wechselstromnetz mit Phasenleiter (P) und Nulleiter (0),
mit einer Anschwingschaltung (R1, C5),
mit einem als Gegentaktfrequenzgenerator ausgebildeten Hochfrequenzschwingkreis (R2 - R5, T1, T2, D5, D6, I1, I2), bei dem ein erster und ein zweiter Transistor (T1, T2) mit zugehörigen Emitterwiderständen (R3, R5) in Serie geschaltet sind,
mit einer ersten Elektrode (E1) der Stromsparlampe, die über eine Verbindungsleitung (VL) an einem Verbindungsanschluss (H) zwischen Emitterwiderstand (R3) des ersten Transistors (T1) und Kollektor des zweiten Transistors (T2) des Hochfrequenzschwingkreises angeschlossen ist und
mit einer zweiten Elektrode (E2) der Stromsparlampe, die mit dem Nulleiter verbunden ist,
**dadurch gekennzeichnet,**
dass eine Induktivität (I4) zusammen mit Wicklungen (I1, I2) des Hochfrequenzschwingkreises auf einen gemeinsamen Kern gewickelt ist und so einen Stromübertrager bildet und dass diese Induktivität in die Verbindungsleitung (VL) eingefügt ist, so dass die Stromsparlampe und die Verbindungsleitung einen Ladepfad für die Speisung der Anschwingschaltung und des Hochfrequenzschwingkreises bilden.

2. Ansteuerungsschaltung nach Anspruch 1, **dadurch gekennzeichnet,** dass die beiden Transistoren (T1, T2) des Hochfrequenzschwingkreises zusammen mit ihren Emitterwiderständen (R3, R5) mit je einer Diode (D5, D6) zwischen dem Verbindungspunkt (H) und Kollektor bezw. Emitterwiderstand (R5) überbrückt sind.

3. Ansteuerungsschaltung nach Anspruch 1 oder 2, **dadurch gekennzeichnet,** dass in die Verbindungsleitung (VL) die Induktivität (I4) und eine Drossel (DR3) in Reihe geschaltet sind.

## Claims

1. Drive circuit for a power-saving lamp (FL), with a rectifier configuration (D1, D2) at the alternating current mains with phase conductor (P) and zero conductor (0), with a starting circuit (R1, C5), with a high frequency resonant circuit (R2 - R5, T1, T2, D5, D6, I1, 12) constructed as a push-pull frequency generator and in which a first and a second transistor (T1, T2) with associated emitter resistors (R3, R5) are connected in series, with a first electrode (E1) of the power-saving lamp, which is connected via a connecting lead (VL) to a connecting terminal (H) between the emitter resistor (R3) of the first transistor (T1) and the collector of the second transistor (T2) of the high frequency resonant circuit and with a second electrode (E2) of the power-saving lamp, which is connected to the neutral conductor, characterized in that an inductance coil (I4), together with the coils (I1, I2) of the high frequency resonant circuit is wound onto a common core and in this way a current transmitter is formed and said inductance coil is introduced into the connecting lead (VL) and that the power-saving lamp and the connecting lead form a charging path for the supply of the starting circuit and the high frequency resonant circuit.

2. Drive circuit according to claim 1, characterized in that the two transistors (T1, T2) of the high frequency resonant circuit, together with their emitter resistors (R3, R5), are bridged with in each case one diode (D5, D6) between the connection point (H) and the collector or emitter resistor (R5).

3. Drive circuit according to claim 1 or 2, characterized in that the inductance coil (I4) and a choke (DR3) are connected in series in the connecting lead (VL).

## Revendications

1. Circuit de commande d'une lampe à faible consommation de courant (FL), comportant
un agencement de redresseurs (D1, D2) sur le réseau à courant alternatif avec un fil de phase (P) et un conducteur neutre (0),
un circuit d'amorçage d'oscillations (R1, C5),
un circuit d'oscillation à haute fréquence (R2 - R5, T1, T2, D5, D6, I1, I2) conçu comme un générateur de fréquences symétrique dans lequel un premier et un second transistor (T1, T2) avec des résistances d'émetteur (R3, R5) correspondantes sont montés en série,
une première électrode (E1) de la lampe à faible consommation de courant qui est reliée par l'intermédiaire d'une ligne de connexion (VL) à un raccord de connexion (H) entre la résistance d'émetteur (R3) du premier transistor (T1) et le collecteur du second transistor (T2) du circuit d'oscillation à haute fréquence et
une seconde électrode (E2) de la lampe à faible consommation de courant qui est reliée au conducteur neutre,
caractérisé en ce qu'une inductance (I4) est enroulée avec des enroulements (I1, I2) du circuit d'oscillation à haute fréquence sur un noyau commun et forme ainsi un transmetteur de courant et en ce que cette inductance est insérée dans la ligne de connexion (VL) de telle sorte que la lampe à faible consommation de courant et la ligne de connexion forment un circuit de charge pour l'alimentation du circuit d'amorçage d'oscillation et du circuit d'oscillation à haute fréquence.

2. Circuit de commande selon la revendication 1, caractérisé en ce que les deux transistors (T1, T2) du circuit d'oscillation à haute fréquence avec leurs deux résistances d'émetteur (R3, R5) sont court-circuités par respectivement une diode (D5, D6) entre le point de connexion (H) et le collecteur respectivement la résistance d'émetteur (R5).

3. Circuit de commande selon la revendication 1 ou 2, caractérisé en ce que l'inductance (I4) et une bobine d'inductance (DR3) sont montées en série dans la ligne de connexion (VL).
